# EUROPÄISCHE PATENTSCHRIFT

(11) **EP 2 376 803 B1**
(45) Veröffentlichungstag und Bekanntmachung des Hinweises auf die Patenterteilung: **21.11.2012**
(21) Anmeldenummer: 10702836.7
(22) Anmeldetag: 03.02.2010
(51) Int. Cl.: F16F 15/131

(54) **ZWEIMASSENSCHWUNGRAD**
DUAL MASS FLYWHEEL
VOLANT À DEUX MASSES

(30) Priorität: 04.02.2009 DE 102009007373
(43) Veröffentlichungstag der Anmeldung: 19.10.2011
(73) Patentinhaber: Magna Powertrain AG & Co. KG, 8502 Lannach (AT)
(72) Erfinder: GLAßNER, Rudolf, A-3623 Kottes (AT)
(74) Vertreter: Rausch, Gabriele
(86) Internationale Anmeldenummer: PCT/EP2010/000632
(87) Internationale Veröffentlichungsnummer: WO 2010/089085

(56) Entgegenhaltungen:
- WO-A1-2004/016968
- DE-A1- 3 213 748
- DE-A1- 19 729 421
- DE-A1- 19 808 730

## Beschreibung

Die vorliegende Erfindung betrifft ein Zweimassenschwungrad für einen Antriebsstrang eines Kraftfahrzeugs.

Ein derartiges Zweimassenschwung dient in einem Kraftfahrzeug zum Zwischenspeichern von Bewegungsenergie während der Leertakte des Motors sowie zum Aufnehmen und Dämpfen von Drehschwingungen zwischen dem Motor und dem Antriebsstrang. Zu diesem Zweck weist das Zweimassenschwungrad eine primäre Schwungmasse und eine sekundäre Schwungmasse auf, die bezüglich einer Drehachse des Zweimassenschwungrads drehbar sind und die durch eine Kopplungseinrichtung drehelastisch miteinander gekoppelt sind. Die Kopplungseinrichtung weist zumindest zwei Schwenkhebel auf, die einer der beiden Schwungmassen zugeordnet sind und die mit einem der anderen Schwungmasse zugeordneten Steuerprofil zusammenwirken. Die Schwenkhebel werden dabei durch elastische Elemente bezüglich der Drehachse in einer radialen Richtung von außen nach innen gegen das Steuerprofil vorgespannt.

Aus der WO 2004/016968 A1 ist beispielsweise ein Zweimassenschwungrad bekannt, dessen Kopplungseinrichtung Schwenkhebel umfasst, die durch in radialer Richtung angeordnete Federelemente von außen nach innen gegen einen Innennocken gepresst werden.

Dokument DE 198 08 730 A1 beschreibt ein Zweimassenschwungrad, dessen Kopplungseinrichtung wenigstens einen Schwenkhebel umfasst, die durch elastische Elemente bezüglich der Drehachse in einer tangentialen Richtung von innen nach außen gegen das Steuerprofil vorgespannt sind.

Die DE 32 13 748 A1 beschreibt eine etwas anders aufgebaute Kopplungseinrichtung für eine Kupplungsscheibe. Die zur Vorspannung der Schwenkhebel gegen einen Innennocken vorgesehenen Federelemente sind hier tangential zur Drehachse um einen Innennocken herum angeordnet.

Nachteilig bei den bekannten Zweimassenschwungrädern ist, dass bei dessen Betrieb aufgrund der auf die einzelnen Bauteile wirkenden Fliehkräfte eine unerwünschte Drehzahlabhängigkeit der Kopplungscharakteristika der jeweiligen Kopplungseinrichtung auftritt.

Eine Aufgabe der vorliegenden Erfindung besteht darin, ein Zweimassenschwungrad mit einer Kopplungseinrichtung zu schaffen, die weniger drehzahlabhängige Kopplungscharakteristika aufweist.

Diese Aufgabe wird durch ein Zweimassenschwungrad mit den Merkmalen des Anspruchs 1 gelöst, und insbesondere dadurch, dass zumindest ein jeweiliger Mittenabschnitt der elastischen Elemente bezüglich der Drehachse in radialer Richtung innerhalb des Steuerprofils angeordnet ist.

Bei dem erfindungsgemäßen Zweimassenschwungrad werden die bei Betrieb auf die elastischen Elemente wirkenden Fliehkräfte minimiert, indem die elastischen Elemente näher an der Drehachse des Zweimassenschwungrads angeordnet werden als bisher üblich. Bei den bekannten Konstruktionen wird der minimale Abstand der elastischen Elemente von der Drehachse durch die Ausgestaltung eines mit dem Schwenkhebel zusammenwirkenden Innennockens mit einem bestimmten Steuerprofil begrenzt. Erfindungsgemäß ist dahingegen vorgesehen, das Zweimassenschwungrad derart zu gestalten, dass die elastischen Elemente in radialer Richtung relativ zu dem Steuerprofil im Wesentlichen weiter innen angeordnet sind. Dies schließt nicht aus, dass Abschnitte der elastischen Elemente in radialer Richtung über das Steuerprofil hinausragen. Wesentlich ist lediglich, dass zumindest ein jeweiliger Mittenabschnitt oder eine mittlerer Bereich der elastischen Elemente, d.h. beispielsweise der Schwerpunkt der elastischen Elemente, näher an der Drehachse des Zweimassenschwungrads angeordnet ist als eine mit den Schwenkhebeln zusammenwirkende Oberfläche des Steuerprofils.

Durch die innen liegende Anordnung der elastischen Elemente können die elastischen Elemente und/oder die mit ihnen zuammenwirkenden Schwenkhebel relativ kurz ausgeführt sein. Die damit einhergehende Reduzierung der Massen der verwendeten Komponenten (verglichen mit herkömmlichen Konzepten) verringert zusätzlich den störenden Einfluss der auf die einzelnen Bauteile wirkenden Fliehkräfte.

Da die elastischen Elemente besonders anfällig für bei Betrieb des Zweimassenschwungrads auftretende Fliehkräfte sind, minimiert dieses Konzept auf besonders effiziente Weise drehzahlabhängige Effekte. Zudem wird gleichzeitig erreicht, dass in radialer Richtung mehr Bauraum zur Ausgestaltung des Steuerprofils zur Verfügung steht. Mit anderen Worten wird die Gestaltung des Steuerprofils nur in geringerem Maß durch radial weiter außen liegende Komponenten begrenzt. Das erfindungsgemäße Zweimassenschwungrad kann daher auch kompakter konstruiert werden.

Vorzugsweise ist das Steuerprofil an einem Innennocken ausgebildet.

Gemäß einer Ausführungsform erstrecken sich die elastischen Elemente jeweils im Wesentlichen in einer tangentialen Richtung, insbesondere beinahezu - vollständiger Komprimierung der elastischen Elemente. Unter "im Wesentlichen in einer tangentialen Richtung" ist zu verstehen, dass auch geringfügige Abweichungen von einer tangentialen Ausrichtung umfasst sind, die beispielsweise bei zunehmenden Ausdehnungen der jeweiligen elastischen Elemente auftreten.

Die elastischen Elemente können einen geringeren Abstand zu der Drehachse besitzen als die Schwenkachsen der Schwenkhebel, um die die Schwenkhebel verschwenkbar sind. Das bedeutet, dass nicht zwangsläufig alle Abschnitte der Schwenkhebel während des Betriebs stets weiter von der Drehachse des Zweimassenschwungrads entfernt sind als jeder Abschnitt der elastischen Elemente. Vielmehr ist bei dieser Ausführungsform entscheidend, dass die die Schwenkhebel lagernden Schwenkachsen radial weiter außen angeordnet sind als die elastischen Elemente. Insbesondere sind die elastischen Elemente in radialer Richtung innerhalb eines Kreises angeordnet, der konzentrisch zu der Drehachse des Zweimassenschwungrads angeordnet ist und dessen Radius durch den Abstand der Schwenkachsen zu der Drehachse definiert ist.

Es kann vorgesehen sein, jedem elastischen Element ein Abstützmittel zuzuordnen, das an der Schwungmasse angeordnet ist, der die Schwenkhebel zugeordnet sind, und das zur Abstützung des jeweiligen elastischen Elements in einer radialen Richtung geeignet ist. Das Abstützmittel hält das elastische Element während des Betriebs des Zweimassenschwungrads in seiner bestimmungsgemäßen Position und wirkt den auftretenden Fliehkräften entgegen. Insbesondere ist das Abstützmittel direkt an der entsprechenden Schwungmasse angeformt. Dadurch, dass die Abstützmittel und die elastischen Elemente derselben Schwungmasse zugeordnet sind, werden verschleißende Relativbewegungen zwischen diesen Bauteilen vermieden. Die Abstützmittel können insbesondere Segmente sein, die - von der Drehachse aus gesehen - leicht konvex gekrümmt sind, um eine in bestimmten Betriebszuständen auftretende Verformung der elastischen Elemente in einer radialen Richtung auf verbesserte Weise aufnehmen zu können.

Weiterhin ist es möglich, dass jedes der elastischen Elemente mit einem Paar von Schwenkhebeln in Kontakt steht. Eine derartige Konstruktion ist konstruktiv einfach zu lösen und bedarf lediglich einer geringen Anzahl von Bauteilen. Das Steuerprofil kann in mehrere identische Abschnitte unterteilt sein, wobei jedes Paar von Schwenkhebeln einem der Abschnitte zugeordnet bzw. mit diesem zusammenwirkt.

Vorzugsweise sind die elastischen Elemente Federn, insbesondere Schraubenfedern.

Eine Anordnung der elastischen Elemente radial innerhalb des Steuerprofils lässt sich besonders vorteilhaft realisieren, wenn im Gegensatz zu einem herkömmlichen Aufbau die elastischen Elemente bezüglich der Drehachse des Zweimassenschwungrads axial versetzt zu dem Steuerprofil angeordnet sind, wobei dies zumindest für die Mittenebene der elastischen Elemente relativ zu der Mittenebene des Steuerprofils gilt.

Jedem Schwenkhebel kann zumindest ein Mitnehmerelement (beispielsweise eine Wälzeinrichtung) zugeordnet sein, das mit dem Steuerprofil in Kontakt steht, wobei eine erste Ebene, in der das Mitnehmerelement und die Steuerfläche in Kontakt stehen, bezüglich der Drehachse axial versetzt zu einer zweiten Ebene angeordnet ist, in der die Schwenkhebel angeordnet sind. Mit anderen Worten sind die elastischen Elemente und das Steuerprofil in axialer Richtung des Zweimassenschwungrads hintereinander - gegebenenfalls auch teilweise in axialer Richtung überlappend - angeordnet. Unter Umständen kann ein Raum in radialer Richtung innerhalb des Steuerprofils zur Anordnung von Komponenten der Kopplungseinrichtung genutzt werden, wodurch der Platzbedarf des Zweimassenschwungrads in axialer Richtung verringert wird.

Gemäß einer vorteilhaften Weiterbildung ist jedem Schwenkhebel ein eigenes Mitnehmerelement zugeordnet. Weiterhin können die elastischen Elemente in der zweiten Ebene angeordnet sein.

Zur optimierten Übertragung des durch die elastischen Elemente erzeugten und auf die einzelnen Schwenkhebel wirkenden Drehmoments auf das Steuerprofil, kann vorgesehen sein, dass die Schwenkhebel jeweils zwei Arme aufweisen, die einen Winkel einschließen, der kleiner als 180° ist. Das heißt die beiden Arme der einzelnen Schwenkhebel sind nicht parallel zueinander angeordnet. Insbesondere liegt die Schwenkachse der Schwenkhebel zwischen dem Ende des Schwenkhebels, das durch das entsprechende elastische Element beaufschlagt wird, und dem Ende, das mit dem Steuerprofil in Kontakt steht.

Insbesondere stehen die Schwenkhebel mit dem Steuerprofil über eine jeweilige Wälzeinrichtung in Kontakt. Die Schwenkhebel können an der einen der beiden Schwungmassen angelenkt sein.

Weitere Ausführungsformen der Erfindung sind den Unteransprüchen, der Beschreibung und den Zeichnungen zu entnehmen.
- Fig. 1: zeigt einen Querschnitt eines erfindungsgemäßen Zweimassenschwungrads entlang der Drehachse.
- Fig. 2: zeigt einen Schnitt durch das erfindungsgemäße Zweimassenschwungrad der Fig. 1 senkrecht zur Drehachse.

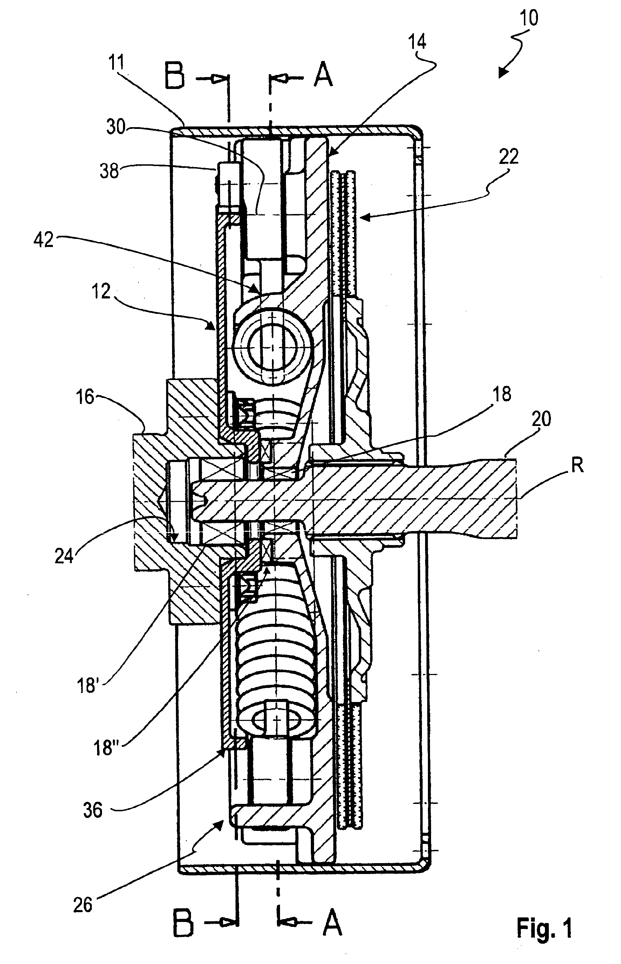

Fig. 1 zeigt schematisch einen Querschnitt durch ein Zweimassenschwungrad 10 entlang seiner Drehachse R. Das Zweimassenschwungrad 10 weist ein Gehäuse 11, eine primäre Schwungmasse 12 und eine sekundäre Schwungmasse 14 auf. Die primäre Schwungmasse 12 ist drehfest mit einer Kurbelwelle 16 eines nicht gezeigten Motors eines Kraftfahrzeugs verbunden, während die sekundäre Schwungmasse 14 durch ein Lager 18 drehbar auf einer Getriebeeingangswelle 20 eines nicht gezeigten Getriebes des Kraftfahrzeugs gelagert ist. Mittels einer Kupplung 22, die in Fig. 1 nur teilweise gezeigt ist, ist die sekundäre Schwungmasse 14 selektiv antriebswirksam mit der Getriebeeingangswelle 20 verbindbar. Die Getriebeeingangswelle 20 ist durch ein weiteres Lager 18' in einer Ausnehmung 24 der Kurbelwelle 16 gelagert. Zur Aufnahme von in bestimmten Betriebszuständen des Zweimassenschwungrads 10 auftretenden, auf die sekundäre Schwungmasse 14 wirkenden Axialkräfte ist ein Lager 18" vorgesehen, das sich über einen radial innen liegenden Abschnitt der primären Schwungmasse 12 auf der Kurbelwelle 16 axial abstützt.

Die Schwungmassen 12, 14 sind durch eine Kopplungseinrichtung 26 drehelastisch miteinander gekoppelt.

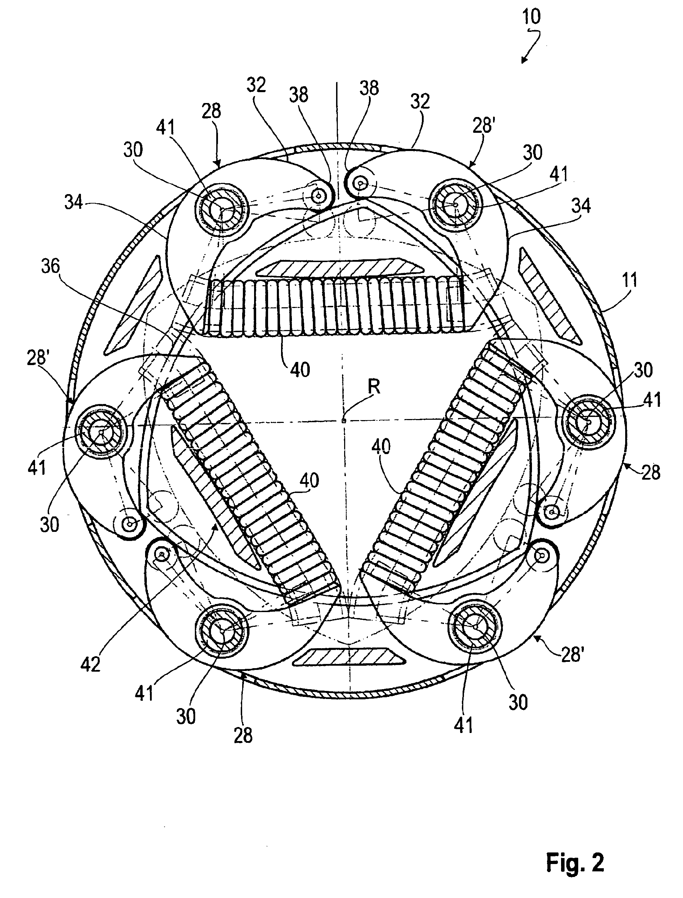

Fig. 2 zeigt einen Schnitt durch das Zweimassenschwungrad 10 senkrecht zur Drehachse R entlang der Schnittlinie AA, wobei auf die Darstellung von Details der Lagerung im Bereich um die Getriebeeingangswelle 20 aus Gründen der Übersichtlichkeit verzichtet wurde.

Fig. 2 sind die einzelnen Komponenten der Kopplungseinrichtung 26 zu entnehmen. Sie umfasst mehrere Schwenkhebel 28, die bezüglich einer jeweiligen Schwenkachse 30 verschwenkbar gelagert sind. Jeder der Schwenkhebel 28 weist einen Mitnehmerarm 32 und einen Hebelarm 34 auf. Die beiden Arme 32, 34 schließen einen Winkel ein, der kleiner als 180° und größer als 90° ist. Die Geometrie der Schwenkhebel 28 kann aber auch davon abweichende Charakteristika aufweisen, falls konstruktionsbedingt andere Gegebenheiten in dem Zweimassenschwungrad 10 vorliegen.

Der jeweilige Mitnehmerarm 32 der Schwenkhebel 28 erstreckt sich von der entsprechenden Schwenkachse 30 hin zu einem Ende des Schwenkhebels 28, das über eine Mitnehmerrolle 38 mit einem an der primären Schwungmasse 12 ausgebildeten Steuerprofil 36 in Kontakt steht. Der Hebelarm 34 dahingegen steht mit seinem der Schwenkachse 30 abgewandten Ende mit einem Ende einer Feder 40 in Kontakt. Das andere Ende der jeweiligen Feder 40 steht wiederum mit dem Hebelarm 34 eines benachbarten Schwenkhebels 28 in Kontakt. Der benachbarte Schwenkhebel 28 ist im Wesentlichen baugleich. Er ist jedoch - bezogen auf eine jeweils zwischen benachbarten Schwenkachsen 30 liegende Symmetrieebene - spiegelbildlich angeordnet

Anhand von Fig. 2 lässt sich auf anschauliche Weise das Wirkprinzip des Zweimassenschwungrads 10 verdeutlichen. Wie bereits vorstehend beschrieben, ist das Steuerprofil 36 an der primären Schwungmasse 12 ausgebildet. Die Schwenkhebel 28 sind dahingegen an einem jeweiligen hohlen Bolzen 41 der sekundären Schwungmasse 14 bezüglich der Schwenkachsen 30 schwenkbar gelagert. Zur Erhöhung der Stabilität können die Schwenkhebel 28 käfigartig umgriffen sein und hierdurch beidseitig abgestützt sein (nicht gezeigt).

Am Beispiel der in Fig. 2 oben liegenden Schwenkhebel 28 wird im Folgenden ausgeführt, wie eine relative Verdrehung der beiden Schwungmassen 12, 14 zu unterschiedlichen Stellungen der Schwenkhebel 28 führen kann. Dargestellt ist ein Zustand, in dem die Mitnehmerrollen 38 der Schwenkhebel 28 aufgrund der Ausgestaltung des Steuerprofils 36 in einer maximalen Entfernung von der Drehachse R angeordnet sind. In diesem Zustand ist die Feder 40 maximal komprimiert. Bei einer Änderung der relativen Stellung der beiden Schwungmassen 12, 14 zueinander - beispielsweise einer Drehung der primären Schwungmasse 12 im Uhrzeigersinn relativ zu der sekundären Schwungmasse 14 - durchfahren die Mitnehmerrollen 38 einen zentralen Bereich des ihnen zugeordneten Segments des Steuerprofils 36. Gestrichelt dargestellt ist in Fig. 2 eine Stellung der primären Schwungmasse 12 relativ zu der sekundären Schwungmasse 14, bei der sich die Mitnehmerrollen 38 am stärksten der Drehachse R annähern. Die Feder 40 ist in diesem Zustand minimal komprimiert, wie ebenfalls durch gestrichelte Linien angedeutet ist. Aufgrund der Verschwenkung der Schwenkhebel 28 verformt sich auch die Feder 40 bei der Ausdehnung leicht und schmiegt sich an ein Abstützsegment 42 an, das die Feder 40 gegen die bei Betrieb wirkenden Fliehkräfte in ihrer radialen Position hält. Um die Krümmung der Feder 40 bei ihrer Ausdehnung optimal aufzunehmen, ist das Abstützsegment 42 von der Drehachse aus gesehen leicht konvex gekrümmt.

Wenn sich die primäre Schwungmasse 12 relativ zur sekundären Schwungmasse 14 weiter im Uhrzeigersinn dreht, werden die Mitnehmerrollen 38 durch die Steuerfläche 36 wieder nach außen gedrückt, wodurch über die Schwenkhebel 28 eine Komprimierung der Feder 40 erfolgt, die eine der relativen Verdrehung der Schwungmassen 12, 14 entgegenwirkende Kraft erzeugt.

Mit anderen Worten ist jedem Paar von Schwenkhebeln 28 jeweils eine Feder 40 und ein Segment des Steuerprofils 36 zugeordnet, wodurch sich bezüglich der Drehachse R eine dreizählige Symmetrie der Kopplungseinrichtung 26 ergibt. Grundsätzlich können auch mehr oder weniger Schwenkhebelpaare vorgesehen sein. Es ist auch möglich, keine Schwenkhebelpaare vorzusehen, sondern die Federn 40 einseitig an der sekundären Schwungmasse 14 abzustützen.

Fig. 2 verdeutlicht den Vorteil, der sich durch die Anordnung der Federn 40 im Wesentlichen radial innerhalb des Steuerprofils 36 ergibt. Aufgrund der Anordnung der Federn 40 näher an der Drehachse R werden die auf sie wirkenden Fliehkräfte minimiert. Zudem wird in radialer Richtung Bauraum gespart bzw. das Steuerprofil 36 kann in radialer Richtung weiter außen verlaufen als bei herkömmlichen Zweimassenschwungrädern. Hierdurch besteht eine größere Gestaltungsfreiheit bezüglich der Steigungen des Steuerprofils 36. Außerdem können die Arme 32, 34 der Schwenkhebel 28 sowie die Federn 40 relativ kurz ausgeführt sein, was sich ebenfalls positiv auf eine Reduzierung der fliehkraftabhängigen Veränderungen der Kopplungscharakteristika auswirkt.

Wieder Bezug nehmend auf Fig. 1 wird nachstehend beschrieben, wie der innerhalb des Steuerprofils 36 liegende Bauraum zur Anordnung der Federn 40 genutzt wird. Um die Konstruktion der Schwenkhebel 28 möglichst einfach zu gestalten und ein gegenseitiges Blockieren der Schwenkhebel 28 und des Steuerprofils 36 zu vermeiden, sind diese Komponenten in axialer Richtung versetzt angeordnet. Die Schwenkhebel 28 und die Federn 40 liegen im Wesentlichen in einer Ebene, die der Schnittebene AA entspricht. In Richtung hin zu der Kurbelwelle 16 parallel versetzt dazu liegt eine Ebene BB, die mittig durch die senkrecht dazu verlaufende Oberfläche des Steuerprofils 36 verläuft. Die Schnittebene BB verläuft auch im Wesentlichen mittig durch die Mitnehmerrollen 38. Mit anderen Worten liegt die Mitnehmerrolle 38 nicht in der Ebene, die durch die Arme 32, 34 der Schwenkhebel 28 aufgespannt wird (Ebene AA). Vielmehr sind die Mitnehmerrollen 28 seitlich an den Schwenkhebel 28 gelagert.

Die in axialer Richtung des Zweimassenschwungrads 10 versetzte Anordnung einzelner Komponenten der Kopplungseinrichtung 26 führt nur zu einer geringfügig größeren Ausdehnung des Zweimassenschwungrads 10 in axialer Richtung, da das Steuerprofil 26 und die damit in Kontakt stehenden Mitnehmerrollen 38 lediglich eine geringe axiale Erstreckung aufweisen. Der sich daraus ergebende parallele Versatz zwischen den Schwenkhebeln 28 und den Federn 40 einerseits und dem Steuerprofil 26 und den Mitnehmerrollen 38 andererseits ist daher nur gering, während die Bauraumeinsparung in radialer Richtung signifikant ist. Wie aufgezeigt, wird somit ein kompaktes Zweimassenschwungrad 10 geschaffen, das zudem weniger durch im Betrieb auftretende Fliehkräfte beeinflusst wird.

### Bezugszeichenliste

- 10: Zweimassenschwungrad
- 11: Gehäuse
- 12: primäre Schwungmasse
- 14: sekundäre Schwungmasse
- 16: Kurbelwelle
- 18, 18', 18": Lager
- 20: Getriebeeingangswelle
- 22: Kupplung
- 24: Ausnehmung
- 26: Kopplungseinrichtung
- 28: Schwenkhebel
- 30: Schwenkachse
- 32: Mitnehmerarm
- 34: Hebelarm
- 36: Steuerprofil
- 38: Mitnehmerrolle
- 40: Feder
- 41: Bolzen
- 42: Abstützsegment
- R: Drehachse
- AA: Schnittebene
- BB: Mitnehmerrolle-Steuerprofil-Ebene

## Patentansprüche

1. Zweimassenschwungrad für einen Antriebsstrang eines Kraftfahrzeugs, umfassend eine primäre Schwungmasse (12) und eine sekundäre Schwungmasse (14), die bezüglich einer Drehachse (R) des Zweimassenschwungrads drehbar sind und die durch eine Kopplungseinrichtung (26) drehelastisch miteinander gekoppelt sind, wobei die Kopplungseinrichtung (26) zumindest zwei Schwenkhebel (28) aufweist, die einer der beiden Schwungmassen (14, 12) zugeordnet sind und die mit einem der anderen Schwungmasse (12, 14) zugeordneten Steuerprofil (36) zusammenwirken, wobei die Schwenkhebel (28) durch elastische Elemente (40) bezüglich der Drehachse (R) in einer radialen Richtung von außen nach innen gegen das Steuerprofil (36) vorgespannt sind,
**dadurch gekennzeichnet, dass**
zumindest ein jeweiliger Mittenabschnitt der elastischen Elemente (40) bezüglich der Drehachse (R) in radialer Richtung innerhalb des Steuerprofils (36) angeordnet ist.

2. Zweimassenschwungrad nach Anspruch 1,
**dadurch gekennzeichnet, dass**
das Steuerprofil (36) an einem Innennocken der anderen der beiden Schwungmassen ausgebildet ist.

3. Zweimassenschwungrad nach Anspruch 1 oder 2,
**dadurch gekennzeichnet, dass**
sich die elastischen Elemente (40) jeweils im Wesentlichen in einer tangentialen Richtung erstrecken.

4. Zweimassenschwungrad nach zumindest einem der vorstehenden Ansprüche,
dadurchgekennzeichnet, dass
die elastischen Elemente (40) einen geringeren Abstand zu der Drehachse (R) besitzen als Schwenkachsen (30) der Schwenkhebel (28), um die die Schwenkhebel (28) verschwenkbar sind.

5. Zweimassenschwungrad nach zumindest einem der vorstehenden Ansprüche,
dadurchgekennzeichnet, dass
das jedem elastischen Element (40) ein Abstützmittel (42) zugeordnet ist, das an der einen der beiden Schwungmasse (14, 12) angeordnet ist, der die Schwenkhebel (28) zugeordnet sind, und das zur Abstützung des jeweiligen elastischen Elements (40) in einer radialen Richtung geeignet ist.

6. Zweimassenschwungrad nach zumindest einem der vorstehenden Ansprüche,
dadurchgekennzeichnet, dass
jedes der elastischen Elemente (40) mit einem Paar von Schwenkhebeln (28) in Kontakt steht.

7. Zweimassenschwungrad nach zumindest einem der vorstehenden Ansprüche,
dadurchgekennzeichnet, dass
die elastischen Elemente (40) Federn, insbesondere Schraubenfedern sind.

8. Zweimassenschwungrad nach zumindest einem der vorstehenden Ansprüche,
dadurchgekennzeichnet, dass
die elastischen Elemente (40) bezüglich der Drehachse (R) axial versetzt zu dem Steuerprofil (36) angeordnet sind.

9. Zweimassenschwungrad nach zumindest einem der vorstehenden Ansprüche,
dadurchgekennzeichnet, dass
jedem Schwenkhebel (28) zumindest ein Mitnehmerelement (38) zugeordnet ist, das mit dem Steuerprofil (36) in Kontakt steht, wobei eine erste Ebene (BB), in der das Mitnehmerelement (38) und das Steuerprofil (36) in Kontakt stehen, bezüglich der Drehachse (R) axial versetzt zu einer zweiten Ebene (AA) angeordnet ist, in der die Schwenkhebel (28) angeordnet sind.

10. Zweimassenschwungrad nach Anspruch 9,
dadurchgekennzeichnet, dass
jedem Schwenkhebel (28) ein eigenes Mitnehmerelement (38) zugeordnet ist.

11. Zweimassenschwungrad nach Anspruch 9 oder 10,
dadurchgekennzeichnet, dass
die elastischen Elemente (40) in der zweiten Ebene (AA) angeordnet sind.

12. Zweimassenschwungrad nach zumindest einem der vorstehenden Ansprüche,
dadurchgekennzeichnet, dass
die Schwenkhebel (28) jeweils zwei Arme (32, 34) aufweisen, die einen Winkel einschließen, der kleiner als 180° ist.

13. Zweimassenschwungrad nach zumindest einem der vorstehenden Ansprüche,
dadurchgekennzeichnet, dass
die Schwenkhebel (28) an der einen der beiden Schwungmassen (14, 12) angelenkt sind.

14. Zweimassenschwungrad nach zumindest einem der vorstehenden Ansprüche,
**dadurch gekennzeichnet, dass**
die Schwenkhebel (28) mit dem Steuerprofil (36) über eine jeweilige Wälzeinrichtung (38) in Kontakt stehen.

## Claims

1. Dual mass flywheel for a drive train of a motor vehicle, comprising a primary flywheel mass (12) and a secondary flywheel mass (14) which are rotatable with respect to an axis of rotation (R) of the dual mass flywheel and which are coupled to one another in a rotationally elastic manner by means of a coupling device (26), the coupling device (26) having at least two pivoting levers (28) which are assigned to one of the two flywheel masses (14, 12) and which cooperate with a control profile (36) assigned to the other flywheel mass (12, 14), the pivoting levers (28) being prestressed against the control profile (36) from the outside inwards in a radial direction with respect to the axis of rotation (R) by elastic elements (40), **characterized in that** at least one respective middle portion of the elastic elements (40) is arranged within the control profile (36) in the radial direction with respect to the axis of rotation (R).

2. Dual mass flywheel according to Claim 1, **characterized in that** the control profile (36) is formed on an inner cam of the other of the two flywheel masses.

3. Dual mass flywheel according to Claim 1 or 2, **characterized in that** the elastic elements (40) extend in each case essentially in a tangential direction.

4. Dual mass flywheel according to at least one of the preceding claims, **characterized in that** the elastic elements (40) are at a shorter distance from the axis of rotation (R) than pivot axes (30) of the pivoting levers (28) about which the pivoting levers (28) are pivotable.

5. Dual mass flywheel according to at least one of the preceding claims, **characterized in that** each elastic element (40) is assigned a supporting means (42) which is arranged on the one of the two flywheel masses (14, 12) to which the pivoting levers (28) are assigned, and which is suitable for supporting the respective elastic element (40) in a radial direction.

6. Dual mass flywheel according to at least one of the preceding claims, **characterized in that** each of the elastic elements (40) is in contact with a pair of pivoting levers (28).

7. Dual mass flywheel according to at least one of the preceding claims, **characterized in that** the elastic elements (40) are springs, in particular helical springs.

8. Dual mass flywheel according to at least one of the preceding claims, **characterized in that** the elastic elements (40) are arranged so as to be offset axially in the control profile (36) with respect to the axis of rotation (R).

9. Dual mass flywheel according to at least one of the preceding claims, **characterized in that** each pivoting lever (28) is assigned at least one driver element (38) which is contact with the control profile (36), a first plane (BB), in which the driver element (38) and the control profile (36) are in contact, being arranged so as to be offset axially with respect to the axis of rotation (R) to a second plane (AA) in which the pivoting levers (28) are arranged.

10. Dual mass flywheel according to Claim 9, **characterized in that** each pivoting lever (28) is assigned a dedicated driver element (38).

11. Dual mass flywheel according to Claim 9 or 10, **characterized in that** the elastic elements (40) are arranged in the second plane (AA).

12. Dual mass flywheel according to at least one of the preceding claims, **characterized in that** the pivoting levers (28) have in each case two arms (32, 34) which form an angle which is smaller than 180°.

13. Dual mass flywheel according to at least one of the preceding claims, **characterized in that** the pivoting levers (28) are articulated on one of the two flywheel masses (14, 12).

14. Dual mass flywheel according to at least one of the preceding claims, **characterized in that** the pivoting levers (28) are in contact with the control profile (36) via a respective rolling device (38).

## Revendications

1. Volant à deux masses pour une chaîne cinématique d'un véhicule automobile, comprenant une masse d'inertie primaire (12) et une masse d'inertie secondaire (14) qui sont rotatives par rapport à un axe de rotation (R) du volant à deux masses et qui sont reliées l'une à l'autre de manière torsio-élastique par un dispositif d'accouplement (26), le dispositif d' accouplement (26) comprenant au moins deux leviers pivotants (28) qui sont associés à l'une des deux masses d'inertie (14, 12) et qui coopèrent avec un profil de commande (36) associé à l'autre masse d'inertie (12, 14), les leviers pivotants (28) étant précontraints par des éléments élastiques (40) contre le profil de commande (36) dans une direction radiale depuis l'extérieur vers l'intérieur par rapport à l'axe de rotation (R),
**caractérisé en ce**
**qu'**au moins une section centrale respective des éléments élastiques (40) est disposée à l'intérieur du profil de commande (36) dans la direction radiale par rapport à l'axe de rotation (R).

2. Volant à deux masses selon la revendication 1,
**caractérisé en ce que**
le profil de commande (36) est réalisé sur un ergot intérieur de l'autre parmi les deux masses d'inertie.

3. Volant à deux masses selon la revendication 1 ou 2,
**caractérisé en ce que**
les éléments élastiques (40) s'étendent respectivement essentiellement dans une direction tangentielle.

4. Volant à deux masses selon au moins l'une quelconque des revendications précédentes,
**caractérisé en ce que**
les éléments élastiques (40) présentent une plus faible distance par rapport à l'axe de rotation (R) que des axes de pivotement (30) des leviers pivotants (28) autour desquels les leviers pivotants (28) peuvent pivoter.

5. Volant à deux masses selon au moins l'une quelconque des revendications précédentes,
**caractérisé en ce**
**qu'**un moyen de support (42) est associé à chaque élément élastique (40), lequel moyen de support est disposé sur l'une des deux masses d'inertie (14, 12) à la quelle sont associés les leviers pivotants (28) et est approprié pour le support de l'élément élastique (40) respectif dans une direction radiale.

6. Volant à deux masses selon au moins l'une quelconque des revendications précédentes,
**caractérisé en ce que**
chacun des éléments élastiques (40) est en contact avec une paire de leviers pivotants (28).

7. Volant à deux masses selon au moins l'une quelconque des revendications précédentes,
**caractérisé en ce que**
les éléments élastiques (40) sont des ressorts, en particulier des ressorts hélicoïdaux.

8. Volant à deux masses selon au moins l'une quelconque des revendications précédentes,
**caractérisé en ce que**
les éléments élastiques (40) sont disposés, par rapport à l'axe de rotation (R), de manière décalée axialement par rapport au profil de commande (36).

9. Volant à deux masses selon au moins l'une quelconque des revendications précédentes,
**caractérisé en ce**
**qu'**au moins un élément d'entraînement (38) est associé à chaque levier pivotant (28), lequel élément d'entraînement est en contact avec le profil de commande (36), un premier plan (BB), dans lequel l'élément d'entraînement (38) et le profil de commande (36) sont en contact, étant disposé, par rapport à l'axe de rotation (R), de manière décalée axialement par rapport à un deuxième plan (AA) dans lequel les leviers pivotants (28) sont disposés.

10. Volant à deux masses selon la revendication 9,
**caractérisé en ce**
**qu'**un élément d'entraînement propre (38) est associé à chaque levier pivotant (28).

11. Volant à deux masses selon la revendication 9 ou 10,
**caractérisé en ce que**
les éléments élastiques (40) sont disposés dans le deuxième plan (AA).

12. Volant à deux masses selon au moins l'une quelconque des revendications précédentes,
**caractérisé en ce que**
les leviers pivotants (28) comprennent respectivement deux bras (32, 34) qui forment un angle qui est inférieur à 180°.

13. Volant à deux masses selon au moins l'une quelconque des revendications précédentes,
**caractérisé en ce que**
les leviers pivotants (28) sont articulés sur l'une des deux masses d'inertie (14, 12).

14. Volant à deux masses selon au moins l'une quelconque des revendications précédentes,
**caractérisé en ce que**
les leviers pivotants (28) sont en contact avec le profil de commande (36) par l'intermédiaire d'un dispositif de roulement (38) respectif.
